# EUROPEAN PATENT SPECIFICATION

(11) **EP 2 661 876 B1**
(45) Date of publication and mention of the grant of the patent: **03.05.2017**
(21) Application number: 12732488.7
(22) Date of filing: 06.01.2012
(51) Int. Cl.: H04N 21/443, H04N 21/462, H04N 21/442, H04N 21/433, G06F 17/30

(54) **METHOD AND APPARATUS FOR UPDATING A DATABASE IN A RECEIVING DEVICE**
VERFAHREN UND VORRICHTUNG ZUM AKTUALISIEREN EINER DATENBANK IN EINER EMPFANGSVORRICHTUNG
PROCÉDÉ ET APPAREIL DE MISE À JOUR D'UNE BASE DE DONNÉES DANS UN DISPOSITIF DE RÉCEPTION

(30) Priority: 06.01.2011 US 201161430271 P; 06.01.2011 US 201161430287 P
(43) Date of publication of application: 13.11.2013
(73) Proprietor: Thomson Licensing, 92130 Issy-les-Moulineaux (FR)
(72) Inventor: FLICKNER, Eric J., Noblesville, Indiana 46060 (US); CLEVENGER, Brian D., Muncie, Indiana 47304 (US); KRAKORA, Randall F., Westfield, Indiana 46074 (US)
(74) Representative: Novagraaf Technologies
(86) International application number: PCT/US2012/020409
(87) International publication number: WO 2012/094551

(56) References cited:
- EP-A1- 0 823 176
- US-A1- 2003 131 252
- US-A1- 2003 177 122
- US-A1- 2004 003 003
- US-A1- 2005 102 704
- US-A1- 2005 102 704
- US-A1- 2008 059 699
- US-A1- 2010 166 384
- US-A1- 2010 175 090
- US-B1- 7 752 173
- US-B2- 7 738 704
- POLYZOIS C A ET AL: "Disk mirroring with alternating deferred updates", PROCEEDINGS OF THE INTERNATIONAL CONFERENCE ON VERY LARGEDATA BASES, XX, XX, 24 August 1993 (1993-08-24), pages 604-617, XP002265843,

## Description

### REFERENCE TO RELATED PROVISIONAL APPLICATION

This application claims priority from provisional application No. 61/430,271, entitled "Method and Apparatus for Searching a Database In a Receiving Device" filed on January 6, 2011 and from provisional application No. 61/430,287, entitled "Method and Apparatus for Updating a Database In a Receiving Device" filed on January 6, 2011.

### TECHNICAL FIELD OF THE INVENTION

The present disclosure generally relates to systems that receive and manage media content and, more particularly, to a method and apparatus for receiving, managing, updating, and searching a database of media content in a receiving device.

### BACKGROUND OF THE INVENTION

Broadcast content service providers and Internet service providers continue to find synergies within their respective content delivery systems. Many new networked devices now include the ability to navigate and search through media content based on inherent capabilities from the provider of the media content or service. New networked devices, particularly those devices used in a home, are merging operations and functions associated with broadcast-centric and Internet network-centric devices. These new networked devices include televisions, settop boxes, home gateways, home computer media stations, tablets, and the like. These new networked devices further offer signal receiving, media recording, home networking, and Internet connectivity capabilities.

However, operational differences between the broadcast-centric devices and the Internet-centric devices remain a problem. As broadcast and Internet based media functions have been merged into a single device, new command, control. and content management issues have developed. For instance, the ability to dynamically access, update, and control the navigation and use of media content in a device remains problematic, particularly when the network includes multiple sources for the media content as well as multiple services and providers. Content and memory management techniques are known. US20030131252 (Barton) discloses an electronic content distribution and exchange system that provides authenticated, reliable content downloads and tracking capabilities. Content is distributed to users through the invention's architecture. A list of available content is displayed to the user through the client system or the Web site. The electronic copy of the song may be already resident on the client system in a hidden area, carouseled in a protected broadcast channel, in the central database ready to be sent out in slices, or resident on a secure server on the Internet. The user accesses content through the client system's user interface where the user plays the content and controls its playback. Additionally, the article "Disk Mirroring with Alternating Deferred Updates" (Polyzois et al) describes a disk mirroring system using alternating read/write conditions with batched updates to improve the efficiency of random access to the content in the memory.

A mechanism is needed that enables the navigation, management, searching, access, and control of media content in a receiving device connected to a network. In particular, a mechanism that improves the management of updates and searches in a media content database structure is needed.

### SUMMARY

According to an aspect of the present disclosure, a method for managing, updating, and searching a media content database on a device is described. The method includes receiving event data associated with media content, the event data including an event identifier, determining if the event identifier matches an event identifier for event data already stored in a memory, adding the received event data to the event data if the received event identifier does not match an event identifier for the stored event data, and replacing the stored event data with the received event data if the received event identifier matches the event identifier for the stored event data.

According to another aspect of the present disclosure, an apparatus for managing, updating, and searching a media content database in a device is described. The apparatus includes means for receiving event data associated with media content, the event data including an event identifier, means for determining if the event identifier matches an event identifier for event data already stored in a memory, means for adding the received event data to the event data if the received event identifier does not match an event identifier for the stored event data, and means for replacing the stored event data with the received event data if the received event identifier matches the event identifier for the stored event data.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.

In the drawings, wherein like reference numerals denote similar elements throughout the views:
FIG. 1 is a block diagram of an exemplary system for delivering video content in accordance with the present disclosure;
FIG. 2 is a block diagram of an exemplary client device in accordance with the present disclosure;
FIG. 3 is a perspective view of a touch panel device in accordance with the present disclosure;
FIG. 4 is a diagram of an architecture for a portion of operating code for managing a media content database in accordance with the present disclosure;
FIG. 5 is a flowchart of an exemplary process for managing a media content database in accordance with the present disclosure;
FIG. 6 is a flowchart of another exemplary process for managing a media content database in accordance with the present disclosure;
FIG. 7 is a flowchart of a further exemplary process for managing a media content database in accordance with the present disclosure;
FIG. 8 is a block diagram of an embodiment of a cache controller in accordance with the present disclosure;
FIG. 9 is a block diagram of an embodiment of a control circuit in accordance with the present disclosure;
FIG. 10 is a diagram illustrating an exemplary record structure for content in accordance with the present disclosure.

It should be understood that the drawing(s) are for purposes of illustrating the concepts of the disclosure and is not necessarily the only possible configuration for illustrating the disclosure.

### DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.
Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present embodiments solve problems associated with efficiently managing a database of media content. The embodiments are directed at managing and updating a database that stores a plurality of media events. The media events may include entries and information received from a program guide, listings of content available from a webservice, or other similar event content entries and information. At the same time that the database is being updated, query requests to the database are executed. These query requests should produce results that are accurate and timely. The present embodiments are best suited to an embedded system, such as a gateway device or settop box, that has limited processing resources. The embodiments include a method and apparatus that receive events and store the events in a memory cache as either a new event or an updated event that overwrites an event already in the memory cache. The cache memory is then written into the database when an indication of, or trigger for, a cache swap or cache flush is determined. The cache swap or cache flush may be triggered based on a number of possible operating conditions, such as when either the new event count or a specific time period is exceeded. Once the cache memory is written and the database is updated, this newly updated database is identified, or pointed to, as the "query" or read only database, and the current "query" database is no longer pointed to, is erased, and a background copy of the new query database is made to the newly erased database in a way that does not impact the query process.

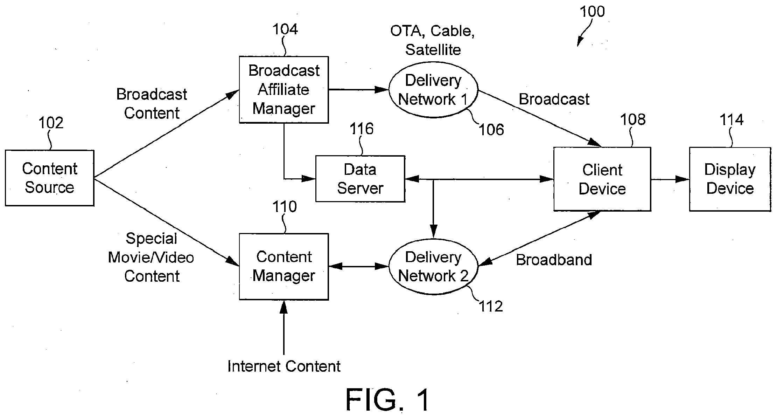

Turning now to FIG. 1, a block diagram of an embodiment of a system 100 for delivering video content to the home or end user is shown. The content originates from a content source 102, such as a movie studio or production house. The content may be supplied in at least one of two forms. One form may be a broadcast form of content. The broadcast content is provided to the broadcast affiliate manager 104, which is typically a national broadcast service, such as the American Broadcasting Company (ABC), National Broadcasting Company (NBC), Columbia Broadcasting Company (CBS), etc. The broadcast affiliate manager may collect and store the content, and may schedule delivery of the content over a delivery network, shown as delivery network 1 (106). Delivery network 1 (106) may include satellite link transmission from a national center to one or more regional or local centers. Delivery network 1 (106) may use any one of the standard transmission protocols and standards for content delivery (e.g., Advanced Television Systems Committee (ATSC) A/53, digital video broadcast (DVB)-Cable (DVB-C), DVB-Satellite (DVB-S), or DVB-Terrestrial (DVB-T)). Delivery network 1 (106) may also include local content delivery using local delivery systems such as over the air broadcast, satellite broadcast, or cable broadcast. The locally delivered content is provided to a user's client device 108 in a user's home. Broadcast affiliate manager 104 also provides information to data server 116. This information may include, but is not limited to, data associated with programming, delivery or broadcast schedules, or other types of information related to the broadcast content.

Additional information (e.g., special notices or scheduling information) or other content not provided to the broadcast affiliate manager may be delivered from content source 102 to a content manager 110. The content manager 110 may be a service provider affiliated with a content provider, broadcast service, or delivery network service. The content manager 110 may operate through an Internet website or web service. The content manager 110 may also incorporate Internet content into the delivery system. The content manager 110 may deliver the content to the user's client box 108 over a separate delivery network, delivery network 2 (112). Delivery network 2 (112) may include high-speed broadband Internet type communications systems. It is important to note that the content from the broadcast affiliate manager 104 may also be delivered using all or parts of delivery network 2 (112) and content from the content manager 110 may be delivered using all or parts of Delivery network 1 (106). In addition, the user may also obtain content directly from the Internet via delivery network 2 (112) without necessarily having the content managed by the content manager 110.

Data server 116 receives the information from broadcast affiliate manager 104 and translates the information into a content stream suitable for delivery to a user device (e.g., client device 108). Data server 116 may include a web service for a web site or some networking site. Data server 116 may connect to delivery network 2 (112) to provide the content stream and information to the client device 108. Alternatively, data server 116 may include a network interface to a cellular network or other wireless delivery network and provide the content and information in a format compatibility with the wireless network directly to client device 108. Additionally, data server 116 may receive information from the Internet through for instance, content manager 110 and delivery network 2 (112). The additional interface permits information related to programs, content, and scheduling to be provided to data server 116 from sources other than broadcast affiliate manager 104 (e.g., other users, websites, or news agencies).

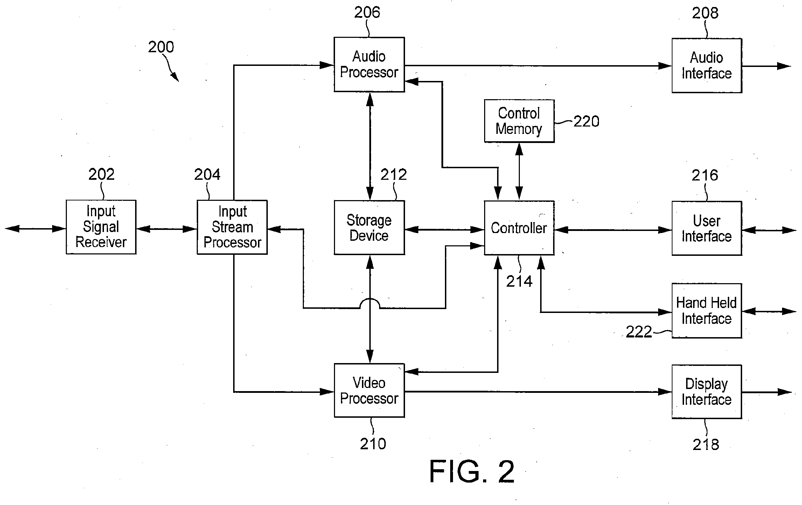

The client device 108 may receive different types of content from one or both of delivery network 1 (106) and delivery network 2 (112). The client device 108 processes the content, and provides a separation of the content based on user preferences and commands. The client device 108 may also include a storage device, such as a hard drive or optical disk drive, for recording and/or storing the content as well as playing back the content as audio and/or video signals. Client device 108 may be a settop box, home media server, computer media station, tablet device, home network gateway, multi-media player, home networking appliance, or the like. Further details of the operation of the client device 108 and features associated with receiving, managing, updating, and searching the stored content will be described below in relation to FIG. 2. The processed content (e.g., audio and video signals) is provided to a display device 114. The display device 114 may be a conventional two-dimensional (2-D) type display or may alternatively be an advanced three-dimensional (3-D) display.

It is important to note that any media programs and content as well as any information related to the media programs and content (e.g., program guides or program metadata) may originate at a content source (e.g., content source 102). The content and information may be transmitted to a content manager and eventually delivered over either delivery network 1 (106) or delivery network 2 (112) to a client or user device (e.g., client device 108). Alternatively, content and information from the content source may be delivered to a data server, such as data server 116, reformatted, and then delivered to the client or user devices. Still further, content and information may originate at the data server (e.g., data server 116) or at a third party source on the Internet and provided to the data server 116 for delivery to client or user devices.

Turning now to FIG.2, a block diagram of an embodiment of the core of a receiving device 200 is shown. Except as described below, the device 200 operates in a manner similar to client device 108 described in FIG. 1. Device 200 may also be incorporated into other systems including the display device 114 itself. In either case, several components necessary for complete operation of the system are not shown in the interest of conciseness, as the components not shown are well known to those skilled in the art.

Signals are interfaced to device 200 at input signal receiver 202. Input signal receiver 202 connects to input stream processor 204. The input stream processor 204 connects to audio processor 206 and video processor 210. Audio processor 206 connects to audio interface 208, which provides the audio output signal from device 200. Video processor 210 connects to display interface 218, which provides the video output signal from device 200. Audio processor 206 and video processor 210 also connect to a storage device 212. A controller 214 connects to the storage device 212, as well as input stream processor 204, audio processor 206, and video processor 210. A control memory 220 connects to the controller 214. Controller 214 also connects to user interface 216 and handheld interface 222.

The content is received in an input signal receiver 202. The input signal receiver 202 may be one or more of several known receiver circuits used for receiving, demodulation, and decoding signals provided over one of the several possible networks including over the air, cable, satellite, Ethernet, fiber and phone line networks. It is important to note that input signal receiver 202 may include receiving, demodulation, and decoding circuitry for data signals as well as media content signals delivered over either the same delivery network as the desired broadcast input signal (i.e., delivery network 1 (106)) or over a different network, (i.e., delivery network 2 (112)) and/or an alternative cellular or wireless network as described in FIG. 1. The received media content and data over delivery network 2 (112) or wireless network may be different from the media content and delivery network 1 (106). The data may include information associated with scheduling changes and updates as well as information related to the media content delivered over either delivery network. In one embodiment, a cable broadcast signal is received, demodulated, and decoded in a cable tuner circuit in signal receiver 202. The desired broadcast input signal may be selected and retrieved in the input signal receiver 202 based on user input provided through a control interface (not shown). Input signal receiver 202 also includes an Internet protocol (IP) interface circuit that additionally provides bi-directional network connectivity.

The decoded output signal from one or more of the circuits in input signal receiver 202 is provided to an input stream processor 204. The input stream processor 204 performs the final signal selection and processing, and includes separation of video content from audio content for the content stream. The audio content is provided to an audio processor 206 for conversion from the received format (e.g., compressed digital signal) to another format (e.g., analog waveform signal). The analog waveform signal is provided to an audio interface 208 and further to the display device 114 or an audio amplifier (not shown). Alternatively, the audio interface 208 may provide a digital signal to an audio output device or display device using a High-Definition Multimedia Interface (HDMI) cable or alternate audio interface such as via a Sony/Philips Digital Interconnect Format (SPDIF). The audio processor 206 also performs any necessary conversion for the storage of the audio signals.

The video output from the input stream processor 204 is provided to a video processor 210. The video signal may be one of several formats. The video processor 210 provides, as necessary a conversion of the video content, based on the input signal format. The video processor 210 also performs any necessary conversion for the storage of the video signals.

A storage device 212 stores audio and video content received at the input. The storage device 212 allows later retrieval and playback of the content under the control of a controller 214 and also based on commands, e.g., navigation instructions such as fast-forward (FF) and rewind (Rew), received from a user interface 216. The storage device 212 may be a hard disk drive, one or more large capacity integrated electronic memories, such as static RAM (SRAM), or dynamic RAM (DRAM), an interchangeable optical disk storage system such as a compact disk drive or digital video disk drive, or storage external to, and accessible by, device 200.

The converted video signal, from the video processor 210, either originating from the input or from the storage device 212, is provided to the display interface 218. The display interface 218 further provides the display signal to a display device of the type described above. The display interface 218 may be an analog signal interface, such as red-green-blue (RGB), or may be a digital interface (e.g., HDMI).

The controller 214 is interconnected via a bus to several of the components of the device 200, including the input stream processor 202, audio processor 206, video processor 210, storage device 212, user interface 216, and handheld interface 222. The controller 214 manages the conversion process for converting the input stream signal into a signal for storage on the storage device or for display. The controller 214 also manages the retrieval and playback of stored content. The controller 214 is further coupled to control memory 220 (e.g., volatile or non-volatile memory, including RAM, SRAM, DRAM, read only memory (ROM), programmable ROM, electronically programmable ROM (EPROM), electronically erasable programmable ROM (EEPROM), flash memory, etc.) for storing information and instruction code for controller 214. Further, the implementation of the memory 220 may include several possible embodiments, such as a single memory device or, alternatively, more than one memory circuit connected together to form a shared or common memory. Still further, the memory may be included with other circuitry, such as portions of bus communications circuitry, in a larger circuit.

In addition to interfacing to a user interface element and a display device, client device 200 may also interface to a handheld device, such as a tablet, through handheld interface 222. This handheld device may include a display screen with additional controls or may include a touch screen. Video signals from video processor 210 as well as other data, such as the on screen display messages and message prompt returns, may be routed between controller 214 and handheld interface 222. Handheld interface 222 may transmit and receive signals and data with a handheld device or tablet using a radio frequency communications link, such as Wi-Fi, Bluetooth, or the Institute of Electrical and Electronics Engineers (IEEE) standard 802.11. Handheld interface 222 may alternatively transmit and receive signals and data with a handheld device or tablet using an infra-red interface.

In operation, device 200 implements a process for updating, managing, and searching a media content database in a client device, such as a settop box or home gateway, as described in further detail below. The physical implementation of the algorithm or function may be done in hardware, such as discrete circuitry related to the video processor 210, or software, such as software residing in the control memory 220 and read and executed by the controller 214. The method involves receiving event data associated with media content, the event data including a unique event identifier, examining the event identifier to store the event data in an array in a cache memory, updating an event count value if the event identifier in the received event data is not currently in the array, and updating a first event database with the event data in the array if a swap of the cache memory is triggered, such as when at least one of an event count value exceeds a predetermined threshold and a time period value exceeds a predetermined threshold.

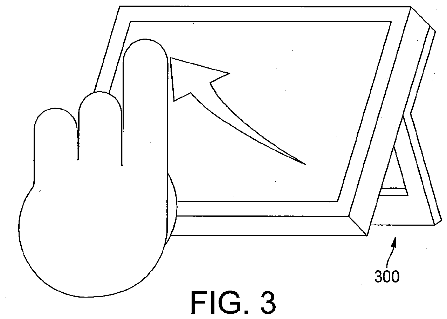

The processes described in the present disclosure may employ an input device that can be used to express functions for searching a database, such as scrolling, browsing, paging, searching by word, etc. To allow for this, a touch panel device 300, shown in FIG. 3, may be interfaced via the user interface 216 and/or handheld interface 222 in device 200, as shown in FIG. 2. The touch panel device 300 allows operation of the receiving device or set top box based on hand movements, or gestures, and actions translated through the panel into commands for the client device (e.g., device 200 or client device 108) or other control device. Further, touch panel device 300 may function as a second screen, allowing additional content, such as on screen display windows and messages to be displayed to the user without interrupting or obscuring the viewing of the main display device (e.g., display device 114). In one embodiment, the touch panel device 300 may serve as a navigational tool to navigate the display of an electronic program guide or content display guide. In other embodiments, the touch panel device 300 will additionally serve as the display device allowing the user to more directly interact with the navigation through the grid guide showing display of content. It is important to note that the touch panel device may be integrated into the settop box itself as part of, for instance, a front panel display or array. The touch panel device 300 may also be included as part of a remote control device containing more conventional control functions, such as activator or actuator buttons.

Operational aspects of a device, such as device 200, that is used as a media storage and interface device typically include the storage, maintenance, searching, retrieval of the media content as well as the database entries or records for identifying the content. Updating of the database information and entries is important in a dynamic system that can include periodic or continual content information updates. For instance, new database records or information may be received and provided to the database. Additionally, currently stored content and entries or information associated with the content may be removed or erased. The content may be removed or erased on a periodic basis or alternatively through inputs to the device from a user control. Simultaneously, or nearly simultaneously, a request, such as a database search request, may be made. In general, all sorts and forms of content and information may be received from multiple sources and input to the database. It is important that a stable database be available for the search request. The data and information needs to be added to the database while still maintaining the search capability and keeping the search results and performance of the search as high as possible. Improvements to updating and searching in the database are even more desirable in a simple database structure (e.g., the structure implemented in a structured query language (SQL) database).

The functioning and control for the updating, managing, and searching of a media content database as described herein may be encompassed as part of the operating code or firmware associated with a gateway device (e.g., device 200). The process may include operating instructions written in any programming language (e.g., Java or hypertext markup language (HTML)). The application may be preloaded or downloaded (e.g., from a server or Internet site), and stored in a memory of the host device. It is to be appreciated that in one embodiment the instructions are stored in control memory 220 of FIG. 2 where the instructions are retrieved thereon and executed by controller 214. In another embodiment, the memory and a corresponding processor or controller to perform the processing may be integrated into a separate stand-alone integrated circuit (e.g., a digital processing processor (DSP) or an application specific integrated circuit (ASIC)).

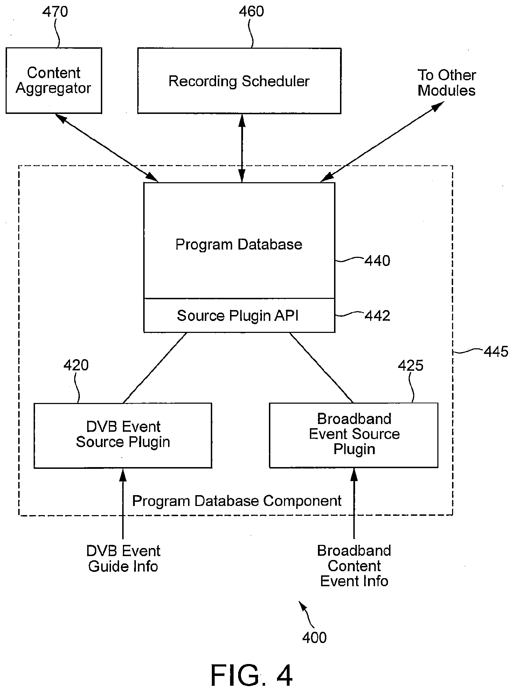

Turning to FIG. 4, a diagram of an exemplary architecture 400 for a portion of operating code used to manage a media content database in a receiving device in accordance with aspects of the present disclosure is shown. Input data from a DVB source is passed to the DVB event source plugin 420. Input data from a second source, a broadband content source, is passed to the broadband event source plugin 425. The DVB event source plugin 420 and broadband event source plugin 425 interface to the source plugin application programming interface (API) 442. Source plugin API 442 interfaces to program database 440. The program database 440 interfaces to both the recording scheduler 460 and content aggregator 470. The source plugin API 442 may also provide for interfaces to other source plugins (not shown). Similarly the program database 440 provides for interfaces to other modules (not shown). Finally, the DVB event source plugin 420, broadband event source plugin 425, source plugin API 442, and program database 440 are encompassed as a program database component 445.

The program database component 445 provides several services and functions for managing a content database within a device (e.g., device 200). The program database component 445 provides a persistent storage of event information (e.g., database entries and information) that is retrievable immediately after reboot of the device. The program database component 445 further provides efficient and flexible search interface functionality on event or entry information and criteria. The search functionality may include searching for specific information related to programs (e.g., genre, time slot). The search functionality may also include searching on combinations of criteria. The program database component 445 also provides a flexible interface for providing event or entry information to the program database 440.

The program database 440 is responsible for collecting and providing a searchable interface for event or entry information. The data provided for events (e.g., media content entries) may vary significantly between different service providers and networks. The program database 440 has been designed with a very flexible search input interface and database structure that allows the operating code to accommodate significant variations in event or entry data without specific knowledge of the details of the data being stored. In addition, the inputs to program database 440 are abstracted through source plugin API 442. The program database specifies an interface through the source plugin API 442 for the initial event processing. The source plugin API 442 does not include functions or operations that are exposed to other components (e.g., recording scheduler 460 and content aggregrator 470).

DVB event source plugin 420 and broadband event source plugin 425 for interfacing event sources are two of several possible shared libraries that can be called directly by program database 440. The DVB event source plugin 420 provides specific interfacing to the program guide data that is carried within a broadcast signal stream adhering to one of the DVB standards. The broadband event source plugin 425 provides specific interfacing to one or more web or Internet based content delivery services. The separate source plugin API 442 is further defined to allow event sources to register with the program database 440 and provide event information. By using a plugin model customizations may be made for a particular service or content provider in the plugin without affecting the rest of program database component 445. The source plugin API 442 also includes interfaces for other source plugins (not shown) to further permit the program database 440 to accommodate event or entry data from multiple sources.

Program database 440 also provides a set of service definitions that allow components (e.g., recording scheduler 460 and content aggregator 470) to search and retrieve events or entries and accompanying information. Recording scheduler 460 uses information from program database 440 to schedule and manage recording of content received by a device (e.g., device 200). These recordings may be automatically recorded based on user preferences or predefined conditions (e.g., series recordings) or may be initiated by a user request. Recording scheduler 460 also receives event (e.g., program guide) updates from program database 440 to adjust the recording schedule when schedule changes occur. For example, a program content episode may be scheduled to record on a given day from 8:00 PM to 8:30 PM. The network provider may then send updated event information to reschedule the episode to be delivered over the network from 8:30 PM to 9:00 PM Recording scheduler 460 receives this event update from program database 440 and adjusts the recording schedule accordingly.

Content aggregator 470 gathers and further identifies content that either exists, or is available, from multiple sources interfaced to the device (e.g., device 200). These sources include any event or program data provided by program database 440. Other sources may include previously recorded content residing on the device, downloaded content residing on the device, and user content residing on a USB stick or the home network. Content aggregator 470 provides a single interface for providing information about all available content. Content aggregator 470 may further interface to other modules or services within the software architecture, including, but not limited to, a digital living network alliance (DLNA) service, a user interface for a local display device, and a remote client running on a tablet.

The processes described below include embodiments that improve the update performance of the database system. The processes may be used in various arrangements and program architectures, including architecture 400. Further, the processes may be included in various devices, including device 200 and client device 108 described previously. The processes encompass the use of two separate exchange mechanisms between separate data storage structures. First, a memory cache structure is used for temporarily storing incoming events, data, and information. Incoming data records and information, typically identifying events such as a new program or an update to a delivery schedule or program guide, are first put into a memory cache. Periodically, the memory caches are swapped and the most recently written memory cache is copied or written to one of the two main databases that is placed into a write only mode. At the same time, the previously written version of the database, representing a stable version of the database, is placed into read mode and used to service any search requests. The caching process may be dynamic and dependent on factors such as the number of entries since the last transfer, an elapsed time period, or the frequency of search requests. Using a combination of factors as a cache swap trigger further enhances the dynamic swap approach by delaying the cache transfers based on the frequency of search requests or increasing transfers based on the receipt of a large number of event entries.

In addition, search requests initiated during the swapping of either the cache or the main database may be identified and queued, stored, or otherwise processed separately during the swap. For example, a search request initiated during the time period of a swap may be serviced initially using the current database. After the swap is completed, the identified requests can be re-serviced using the updated information as a follow up to the earlier search request results.

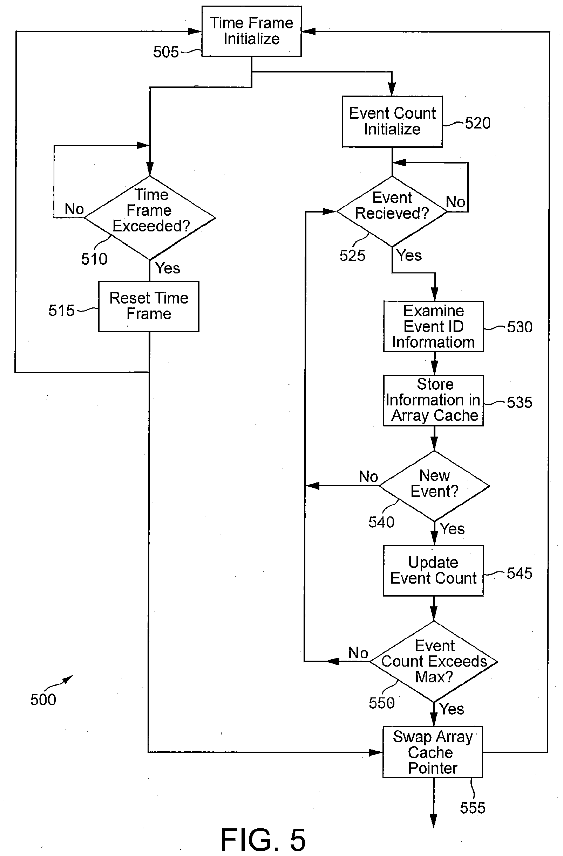

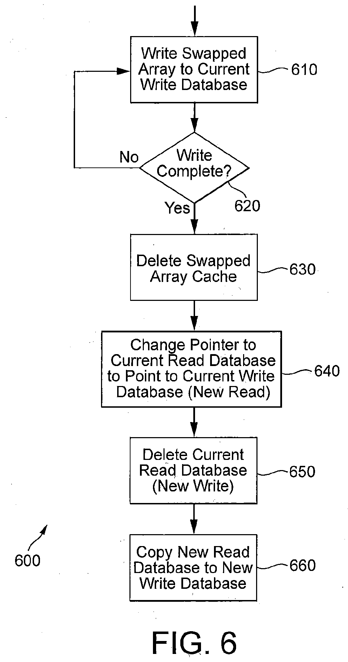

Turning now to FIG. 5 and FIG. 6 a process 500 and process 600 for updating a database in a device according to aspects of the present disclosure are shown. Process 500 and process 600 will primarily be described with respect to the device 200 described in FIG. 2. However, one or more of the steps in process 500 and/or process 600 may be equally applicable to client device 108 described in FIG. 1. Furthermore, it is understood that the steps in process 500 and/or process 600 may rely on communications delivered from a broadcast network source (e.g., delivery network 1 (106) in FIG. 1) as well as delivered to and from a secondary network (e.g., delivery network 2 (114) in FIG. 1). Further, it is important to note that some of the steps described in process 500 and process 600 may be implemented more than once, or may be implemented recursively. Such modifications may be made without any effect to the overall aspects of either process 500 or process 600.

Additionally, it is important to note that although process 500 and process 600 will be described in conjunction with each other, the processes are separable. Process 500 primarily describes the operations for initial event or entry caching and updating. Process 600 primarily describes the steps included in a complete database swapping process. As a result, process 500 and process 600 may be implemented independently.

In process 500, at step 505, the process begins with initializing the start of a time frame. The time frame initialization provides one mechanism for determining the time for accumulating new inputs, such as entries, content, and information, for inclusion in the program database. The time frame information may be maintained through the operation of a timer. The timer may operate on a real time basis, or alternatively may operate on an "actual use" time basis, such as using the time of operation of the device. The time frame may be a predetermined value, such as five minutes, or may be dynamically adjustable either by the user or through a monitoring of the process (e.g., number of entries over a time period, time of day covered, etc). Also, at step 505, the appropriate time basis (e.g., timer) is monitored by controller 214 in device 200. At step 510, while the time basis is either peridodically or continually monitored, a determination is made as to whether the time frame initialized at step 505 is exceeded. If the time frame is not exceeded, at step 510, then monitoring is continued until a next determination, at step 510. If, at step 510, the time frame is exceeded, then, at step 515, the time frame is reset. After the reset, at step 515, the process returns to initialize a new time frame, at step 505.

Separately, following the time frame initialization, at step 505, an event count is initialized, at step 520. Next, at step 525, received events or entries or monitored. As described previously, these events or entries may be new entries from a content source or content provider or may be updates to existing entries in the database. In either case, changes are necessary to the database based on the entry. If no event is received, at step 525, the process returns to step 525 to continue monitoring. If, at step 525, an event or entry is received, then, at step 530, the event or entry information is examined. In particular, information related to the event identifier is examined. As will be described later, the event identifier is used to determine if the event or entry is new for purposes of the event counter.

Next, at step 535, the event or entry information is stored in an array cache structure. Storage of the event or entry information, and location of the array cache pointer structure, may be done in control memory 220, storage device 212, or in a separate memory structure (not shown). Further, process 500 maintains two array cache structures, each with a separate pointer. At step 540, a determination is made as to whether the received entry or event represents a new event. The determination may be made by comparing the unique identifier in the event with the unique identifiers of events already in the array cache.

If, at step 540, the determination is made that the received event or entry is not new, then the process returns to wait for a new event, at step 525. In this case, the received event or entry and information may be used to replace the information for a previous event or entry in the array cache. If, at step 540, the determination is made that the received event or entry is new, then, at step 545, the event count is updated or incremented. The received event or entry and information may then also be added to the array cache.

Next, at step 550, a determination is made as to whether the recently incremented event count, at step 545, exceeds a predetermined event count maximum threshold. As described previously, the maximum event count may be a fixed value (e.g., ten events), a user settable value, or a dynamic value that takes into account other operating conditions (e.g., number of events per time period or time of day). If, at step 550, the determination is made that the event count has not exceeded the threshold, then the process returns to wait for a new event, at step 525.

If, at step 550, the determination is made that the event count has exceeded the threshold, then, at step 555, the pointer currently pointing to indexes present in the currently used array cache is changed to point to a second array cache. This second array cache is empty and cleared of any previous entries. The array cache that contains the most recent entries is maintained until the contents are written into the main database as part of process 600. Additionally, process 500 returns, after step 555, to begin a new event caching cycle with the time frame initialization, at step 510.

Turning now to process 600 in FIG. 6, at step 610, the current write database is updated with the new entries from the array cache. The array cache that was swapped, at step 555, and containing the most recent received entries or events is written to the current write database. As mentioned previously, two databases may be maintained in order to facilitate a database swap. At any point in time one of the databases is the current write database while the other database is the current read database. At step 620, a determination is made as to whether the write process, at step 610, is complete. If, at step 620, the determination is made that the write process is not complete, then the process returns, at step 610, to continue writing entries or events into the current write database.

If, at step 620, the determination is made that the write process is complete, then, at step 630, the swapped array cache is deleted. At step 640, a database swap is performed. The database swap involves changing the pointer pointing to the current read database to point to the current write database. In addition to changing the pointer, a write protection condition to prevent writing may be placed on the current write database while a current write protection to enable writing may be placed on the current read database. The current write database that is updated with the new events or entries, at step 610, is now the new read database.

Next, at step 650, the current read database is erased to become the new write database. All of the entries and events stored in the database are deleted or removed. At step 650, the contents of the new read database, identified further as the former current write database that has become the current read database, are copied into the new write database, identified further as the former read database that has become the current write database. The events and entries contained in the new read database are read out and written into the new write database.

It is important to note that the writing, at step 610, is monitored, at step 620, so that a database swap, at step 640, does not occur prior to completion of writing the array cache into the current write database. It is also likely that only a portion of the database content may be changed as a result of the writing, at step 610. In some embodiments, in order for the process to remain efficient, the writing, at step 610, may be given priority for using resources in the device (e.g., processing time in controller 214 and communications bus time) compared to lesser operations and functions (e.g., database search requests, user input processing, etc). In other embodiments, no higher priority may be given the writing, at step 610. Instead, design considerations are made to ensure that sufficient buffering of the writing, at step 610, in order to prevent data loss. Further, the writing or copying, at step 660, may be done as a background operation (i.e., given lower priority over resources) and may require little or no monitoring. The writing, at step 660, must be finished before the next cache array swap, at step 550, has been completed. In some embodiments, it may be advantageous to monitor the writing, at step 660, and adjust the threshold for the time frame, at step 510, or the event count, at step 550.

It is also important to note that the steps in process 500 and process 600 describe only a preferred embodiment. In some other embodiments, one or both of the caches described in process 500 may be eliminated or integrated into one or both of the main databases described in process 600. Additionally, more than two caches or more than two databases may be used in order to allow for further flexibility in resource and/or time management. In still other embodiments, certain steps in process 500 or process 600 may be rearranged or may be eliminated. For example, in one embodiment, the array cache swap, at step 555, may alternatively occur after completing the writing of the events or entries into the current write database, at step 620. Further, although the time frame comparison, at step 510, and the event count comparison, at step 550, are shown as being performed in parallel, it is possible that the comparison steps may be performed in series. For instance, the comparison, at step 510, may be performed just before the comparison, at step 550.

The steps in process 500 and 600 describe a process for efficiently managing a media content database by controlling the update mechanisms for the database. Managing the frequency of database swaps permits control of the tradeoff between performance, particularly performance with respect to data input/output throughput, and the accuracy of the content presented to the user. The steps in process 500 and process 600 are responsible for caching database entries and updating the main database only after receiving a predefined number of cached records, a predefined time period, or some other possibly dynamically adjustable parameter. The caching mechanism improves the performance of database updates by making the update process more resilient against several operational scenarios, including power loss. The caching mechanism improves performance by distributing, or amortizing, transaction overhead across multiple records, thereby reducing total transaction time. For example, many database management systems may allow for a large number of database entry insertion operations. However, actual database update speed, or transaction time, may be limited by other factors, such as storage medium transfer rates. The management system often treats each database entry insertion as a separate transaction. By grouping multiple database entries into one insertion operation using a controlled update mechanism the transaction time may be amortized, or distributed, across multiple insertion operations. The controlled update mechanism results in reduced update time and improved database update speed.

As an exemplary illustration of some of the advantages of the processes described herein, a device receives 25 portions or "chunks" of event records over a given period of time (e.g. from a plugin module within the software or from an external source). Each portion of event records may in turn include as many as 50 events. If a typical database update time is two seconds for each transaction, then updating the database at the time of receiving each portion of event records (e.g., write to database, flush to disk, etc. for each chunk) results in a total waiting time of at least 50 seconds when the database is considered "invalid" (i.e., not updated) against the latest received updates. By caching the portions (e.g., 25 portions at a time) of incoming events and writing them to the database at one time as a single transaction the total wait time may be reduced to as little as two seconds. The caching process may further be operated and managed dynamically based on a number of factors, including frequency of updates, or frequency of accesses, as described previously.

Additionally, the long waiting time for the individual transactions for each received portion results in a slower database query and reading time for content searches due to the greater potential for concurrent updating and database queries or search requests. Many database systems do not permit or recommend simultaneous write and read operations. The swapping or updating processes described herein address problems associated with concurrent write, or update, and read, or query, access. Maintaining a separate read and write database permits a faster user response for search request.

Further, the caching mechanism may also reduce the amount of data that is potentially written into the database. In some content delivery scenarios, the same event information may be provided repetitively. Such scenarios often exist in broadcast signal delivery systems in which program guide information for several days may be broadcast and sent at hourly intervals. Many event entries in the currently received program guide are identical to previously received event or entry information. Further, some entries may be received that are updates for entries previously received. By maintaining event identifiers and updating the cache to either include a new entry or, alternatively, update or replace an existing entry to include only the latest updated information, all repetitive updates are limited to identified changes in the event or memory cache. Additionally, any unnecessary updates as a result of repetitive event or entry information are minimized.

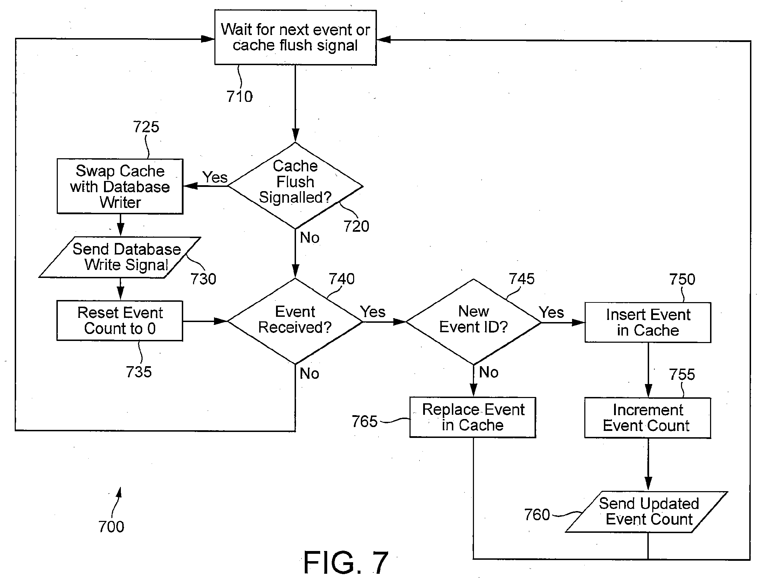

Turning now to FIG. 7, another embodiment of a process 700 for updating a database in a device according to aspects of the present disclosure is shown. As with process 500 and process 600, process 700 will primarily be described with respect to the device 200 but one or more of the steps may be equally applicable to client device 108 described in FIG. 1. Process 700 primarily describes an alternative process to process 500. As with process 500, process 700 may be used in conjunction with process 600 or may be used completely independent of process 600. Further, it is important to note that some of the steps described in process 700 may be implemented more than once, or may be implemented recursively. Such modifications may be made without any effect to the overall aspects of process 700.

At step 710, the process waits for either the next received event or a cache flush signal. It is important to note that, at step 710, certain operating conditions are considered to already be in progress and active, including a current event count and a timer elapsed time count. If either a new event or entry is received or a cache flush signal is received, then, at step 720, a determination is made as to whether a cache flush signal is received. If a cache flush signal is received, then, at step 725, control of the current event cache is transferred to the current write database. At step 730, a database write signal is provided to the current write database. The transfer of control, at step 725, and sending the write signal, at step 730, allow the current event cache to be written into the current write database in a manner similar to step 610 in process 600. At step 735, the current event count is reset to zero.

If, at step 720, it is determined that a cache flush signal is not received or following the event count reset, at step 735, then, at step 740, a determination is made as to whether an event or entry for the database has been received. If no event or entry has been received, at step 740, then process 700 returns to step 710 to wait for the next received entry or event or for a cache flush signal. If, at step 740, it is determined that an event has been received, then, at step 745, a determination is made as to whether the received event is identified as a new event. A new event is identified if the received event is different from the events already in the current event cache. For example, each event may include a unique event identifier, or event ID. When an event is received the received event's identifier is compared to the current list of event identifiers in the event cache. If no match is found, then, the received event is identified as a new event.

If, at step 745, the received event or entry is determined to be a new event, then, at step 750, the received event is added to the current event cache. At step 755, the event count is incremented and, at step 760, the updated incremented event count is sent or provided to other processes or functions. For instance, at step 760, the updated event count may be sent to a process or circuitry for dynamically determining when the cache flush signal should be generated and sent, similar to steps 510 and 550 described in process 500. Further details regarding determining and generating a cache flush signal will be described below. It is important to note that the generated and sent cache flush signal may then be received, at step 710, at the beginning of process 700.

If, at step 745, the received event or entry is determined not to be a new event, then, at step 765, the received event is inserted into the current event cache, in place of the event with the same event ID currently in the current event cache. In this manner, events that are currently in the event cache can be updated by newer received event information without waiting for any further writing of the information into a database. After either sending the updated event count or replacing an event in the current event cache, process 700 returns to step 710 and waits for the next received entry or event or for a cache flush signal. Further, it is important to note that the event count is incremented and sent only if it is determined, at step 745, that the received event is a new event. If the received event is not a new event, then the information for the received event replaces the information for the same event in the current event cache without incrementing the event count or sending an update event count value.

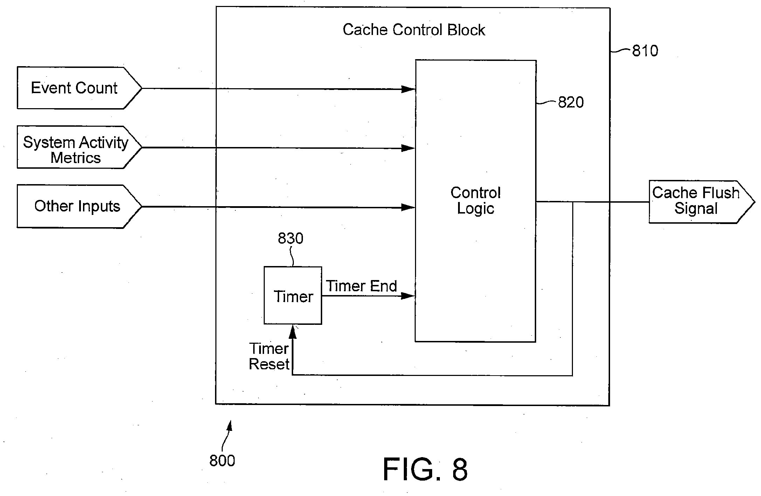

Turning now to FIG. 8, a block diagram of an embodiment of a cache controller 800 according to aspects of the present disclosure is shown. Cache controller 800 includes the circuitry that may be included as part of a control circuit used in a receiving or gateway device (e.g., device 200 described in FIG. 2 or client device 108 described in FIG. 1). Further, the logic functions implemented by cache controller 800 are similar to one or more process steps described earlier in either for process 500 in FIG. 5 or process 700 in FIG. 7.

Cache controller 800 includes cache control block 810. Cache control block 810 includes control logic 820. Control logic 820 receives an event count input signal, one or more system activity metrics signals, and other inputs, including threshold value signals and enable/disable signals used in the cache control process. Cache control block 810 also includes a timer 830. Timer 830 provides a timer end signal to control logic block 820. The output of control logic block 820 is the cache flush signal, also identified as the output of the cache controller 800. This cache flush signal is similar to the signal described in step 720 in process 700 and is also provided as a timer reset input to timer 830.

Control logic block 820 receives several inputs and processes those inputs in combination to determination when the event cache or memory should be swapped and/or flushed. Control logic block 820 may be implemented as one of several embodiments including, for instance, a set of logic gates, a programmable logic array, or as part of a microcontroller circuit. Control logic block 820 receives one input indicating event count, similar to the event count described at steps 520, 545, and 550 in process 500 or steps 730, 755, and 760 in process 700. Control logic block also receives an input including one or more other system activity metrics, other than event count. These metrics may include an indication of the rate of receiving new entries, an indication of a time of day, an indication of the rate of user search requests, or any other metric that may be used to alter the output of control logic block 820. In addition, control logic block 820 receives another input that may include pre-stored values, such as threshold values for one or more of the previously mentioned metrics. These values may be determined as part of the initial design or may be user selectable. These values may be further stored in a memory in the device (e.g. memory 220 in device 200). Each of the inputs may be one or more digital bit value signals forming a byte of data. For example, each input may be 8 bits provided individually on parallel signal lines.

Timer 830 operates based on an input clock signal (not shown) and provides the timer function similar to the timer described at steps 505, 510, and 515 in process 500. Timer 830 uses the clock signal to maintain an elapsed time since the last timer reset. The elapsed time value may be predetermined as a part of the design or may be user selectable. Once the count value in timer 830 exceeds a predetermined value, a timer end signal is sent to control logic block 820. This timer end signal may remain until timer 830 receives a timer reset signal in conjunction with the cache flush signal at the output of control logic block 820.

In operation, cache controller 800 receives inputs such as event count and activity metrics along with other inputs such as threshold values from other components in a device (such as device 200). Using these inputs, along with a timer end signal, cache controller 800 determines when to perform a swap or flush of the current event cache memory. As described previously, in some instances more than two event caches may be used or alternatively, a more integrated memory structure incorporating both the event cache and the database may be used.

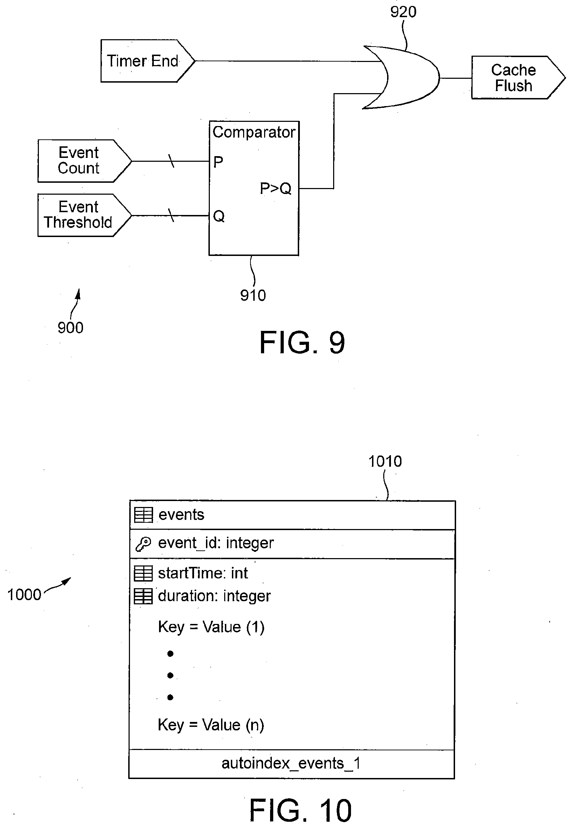

Turning now to FIG. 9, a block diagram of an embodiment of a control circuit 900 according to aspects of the present disclosure is shown. Control circuit 900 includes the circuitry that may be included in a cache control block used in a cache controller (e.g., cache controller 800 described in FIG. 8). Further, the logic functions implemented by control circuit 900 are similar to one or more process steps described earlier in either for process 500 in FIG. 5 or process 700 in FIG. 7.

Control circuit 900 includes a comparator 910 that receives two inputs, event count and event threshold. The output of comparator 910 is provided to OR gate 920. The output of OR gate 920 represents one of the possible cache flush signals.

Comparator 910 may be a simple astable, or unclocked, comparator. Each of the inputs P (event count signal) and Q (event threshold signal) may be one or more digital bit value signals forming a byte of data, as described previously. The output of comparator 910 may be a logic low (e.g., value "0") until the Q input value (represented by the input bit signal) exceeds the P input value. When the Q input exceeds the P input, then the output of comparator 910 changes to a logic high (e.g., value = "1"). Comparator 910 may also include a clock input (not shown) to allow synchronous operation. In synchronous operation, a state change from low to high at the output may occur on the first clock edge following the Q input value exceeding the P input value.

OR gate 920 receives the output from comparator 910 as well as single bit input signal, timer end. The OR gate 920 output remains a logic low until either output from comparator 910 or the timer end signal value is a logic high. When either input is logic high, then the output of the OR gate 920 (i.e., cache flush signal) becomes a logic high.

It is important to note that other circuits similar to control circuit 900 may be included in a cache controller (e.g., cache controller 800 described in FIG. 8). Each of these control circuits may generate a separate cache flush signal and each of the signals may further be connected together to generate a final cache control signal similar to the cache control signal described in FIG. 8.

Turning now to FIG. 10, a diagram illustrating an exemplary record structure 1000 for content events or entries in accordance with the present disclosure is shown. Record structure 1000 may be used in conjunction with process 500, process 600, and process 700 described previously. Record structure 1000 may also be used in conjunction with architecture 400 described in FIG. 4 and implemented and stored in memory in a receiving device (e.g., device 200 in FIG. 2 or client device 108 in FIG. 1). It is important to note that record structure 1000 illustrates only one possible record structure. Other record structure configurations are possible and may be dependent on the operating code involved or the programming language used, and these configurations are considered within the scope of the present disclosure.

Record structure 1000 includes an events table 1010. The events table 1010 includes entries for an event identifier, start time, and duration. In addition, events table 1010 may include one or more "key equals value" entries. Each of these entries is identified specifically for each event and may vary from event to event. The event information is parsed to identify specific information types or keys. These keys are matched up to a set of generic key type entries and the specific information associated with the information type is assigned as the value. For example, an event may include a title identifier with the Title being "Transformers". In this case, an entry is added to the events table 1010 as "Title = Transformers". Other key types may include description, parental rating, series identifier, episode identifier, and service identifier. In addition, main events table 1010 includes a list linking capability for auto indexing of events based on one or more of the entries in the events table 1010.

The present embodiments are directed at efficiently managing a database of media content. The embodiments describe updating a database for storing a plurality of media events (e.g., entries from a program guide) that must be updated while still permitting and executing valid query requests to the database. The embodiments include a method and apparatus that receives events and stores the events in a memory cache as either a new event or an updated event that overwrites an event already in the memory cache. The cache memory is then written into the database based on a trigger to perform a cache memory swap. The trigger for the cache memory swap may be based on a number of different triggering events, such as when either the new event count or a specific time period is exceeded. Using a combination of events for the trigger allows the trigger to be dynamic. Once the cache memory is written and the database is updated, this database is identified, or pointed to, as the "query" or read only database, and the current "query" database is no longer pointed to, erased, and a background copy of the new query database is made to the newly erased database in a way that does not impact the query process.

Although embodiments which incorporate the teachings of the present disclosure have been shown and described in detail herein, those skilled in the art can readily devise many other varied embodiments that still incorporate these teachings. Having described preferred embodiments of a method and apparatus for managing a media content database on a device (which are intended to be illustrative and not limiting), it is noted that modifications and variations can be made by persons skilled in the art in light of the above teachings.

## Claims

1. A method comprising:
receiving (525) event data associated with media content, the event data including an event identifier;
determining (540) if the event identifier matches an event identifier for event data already stored in a first cache memory;
adding (750) the received event data to the event data stored in the first cache memory if the received event identifier does not match an event identifier for the event data stored in the first cache memory;
replacing (765) the event data stored in the first cache memory with the received event data if the received event identifier matches the event identifier for the event data stored in the first cache memory, the method further characterized such that the step of adding (750) the received event data also increments (755) an event count value and the step of replacing the event data stored in the first cache memory does not increment the event count value and the method further comprises:
determining (510, 550) if a cache memory swap is to occur, the determination based on the event count value and a time period from a previous cache memory swap, wherein the first cache memory is swapped with a second cache memory, said second cache memory performing the steps of receiving, determining, adding and replacing after the cache memory swap;
updating (610) a first event database with the event data in the first cache memory after it is determined that the cache memory swap is to occur, the first event database being identified as a write database before the step of updating the first event database and identified as a read database after the step of updating; and
copying (660) the contents of the updated first event database to a second event database, the second event database being identified as a read database before the step of updating and identified as a write database after the step of updating.

2. The method of claim 1, wherein the step of determining (540) includes determining if at least one of the event count value exceeds a predetermined event count threshold value and a time period value from a previous memory swap exceeds a predetermined time period value.

3. The method of claim 2, wherein the predetermined event count threshold value and the predetermined time period value are based on at least one of the number of events received in a time period, the time of day, and a number of event queries in a time period.

4. The method of claim 1, further comprising:
receiving an event query, the event query requesting information associated with one or more events;
determining if the first event database has been updated;
directing the event query to the first event database as a read database if the first event database has been updated.

5. The method of claim 4, further comprising:
directing the event query to the second event database as a read database if the first event database has not been updated.

6. The method of claim 1, wherein the event data associated with media content is received from one of at least two content sources.

7. An apparatus (200) comprising:
means for receiving (202) event data associated with media content, the event data including an event identifier;
means for determining (214) if the event identifier matches an event identifier for event data already stored in a first cache memory;
means for adding (220) the received event data to the event data stored in the first cache memory if the received event identifier does not match an event identifier for the event data stored in the first cache memory;
means for replacing (220) the event data stored in the first cache memory with the received event data if the received event identifier matches the event identifier for the event data stored in the first cache memory, the apparatus further characterized such that the means for adding (212) the received event data also increments an event count value and the means for replacing (212) the event data stored in the first cache memory does not increment the event count value and the apparatus further comprises:
means for determining (800) if a cache memory swap is to occur, the determination based on the event count value and a time period from a previous cache memory swap, wherein the first cache memory is swapped with a second cache memory, said second cache memory performing the steps of receiving, determining, adding and replacing after the cache memory swap;
means for updating (212) a first event database with the event data in the first cache memory if it is determined that the memory swap is to occur, the first event database is identified as a write database before the step of updating the first event database and identified as a read database after the step of updating; and
means for copying (212) the contents of the updated first event database to a second event database, the second event database being identified as a read database before the step of updating and identified as a write database after the step of updating.

8. The apparatus of claim 7, wherein the means for determining (800) includes means for determining if at least one of the event count value exceeds a predetermined event count threshold value and a time period value from a previous memory swap exceeds a predetermined time period value.

9. The apparatus of claim 7, further comprising:
means for receiving (216, 222) an event query, the event query requesting information associated with one or more events;
means for determining if the first event database has been updated;
means for directing the event query to the first event database as a read database if the first event database has been updated.

10. The apparatus of claim 9, further comprising:
means for directing the event query to the second event database as a read database if the first database has not been updated.

11. The apparatus of claim 7, wherein the apparatus is a receiving device that receives event data from a broadcast content delivery network and a broadband content delivery network.

## Patentansprüche

1. Verfahren, das umfasst:
Empfangen (525) von Ereignisdaten, die Medieninhalt zugeordnet sind, wobei die Ereignisdaten eine Ereigniskennung enthalten;
Bestimmen (540), ob die Ereigniskennung mit einer Ereigniskennung für bereits in einem ersten Cache-Speicher gespeicherte Ereignisdaten übereinstimmt;
Hinzufügen (750) der empfangenen Ereignisdaten zu den in dem ersten Cache-Speicher gespeicherten Ereignisdaten, falls die empfangene Ereigniskennung mit einer Ereigniskennung für die in dem ersten Cache-Speicher gespeicherten Ereignisdaten nicht übereinstimmt;
Ersetzen (765) der in dem ersten Cache-Speicher gespeicherten Ereignisdaten durch die empfangenen Ereignisdaten, falls die empfangene Ereigniskennung mit der Ereigniskennung für die in dem ersten Cache-Speicher gespeicherten Ereignisdaten übereinstimmt, wobei das Verfahren ferner **dadurch gekennzeichnet ist, dass** der Schritt des Hinzufügens (750) der empfangenen Ereignisdaten außerdem einen Ereigniszählwert inkrementiert (755) und dass der Schritt des Ersetzens der in dem ersten Cache-Speicher gespeicherten Ereignisdaten den Ereigniszählwert nicht inkrementiert, und wobei das Verfahren ferner umfasst: Bestimmen (510, 550), ob ein Cache-Speichertausch stattfinden soll, wobei die Bestimmung auf dem Ereigniszählwert und auf einer Zeitdauer von einem vorhergehenden Cache-Speichertausch beruht, wobei der erste Cache-Speicher mit einem zweiten Cache-Speicher getauscht wird, wobei nach dem Cache-Speichertausch der zweite Cache-Speicher die Schritte des Empfangens, des Bestimmens, des Hinzufügens und des Ersetzens ausführt;
Aktualisieren (610) einer ersten Ereignisdatenbank mit den Ereignisdaten in dem ersten Cache-Speicher, nachdem bestimmt worden ist, dass der Cache-Speichertausch stattfinden soll, wobei die erste Ereignisdatenbank vor dem Schritt des Aktualisierens der ersten Ereignisdatenbank als eine Schreibdatenbank identifiziert wird und nach dem Schritt des Aktualisierens als eine Lesedatenbank identifiziert wird; und
Kopieren (660) des Inhalts der aktualisierten ersten Ereignisdatenbank in eine zweite Ereignisdatenbank, wobei die zweite Ereignisdatenbank vor dem Schritt des Aktualisierens als eine Lesedatenbank identifiziert wird und nach dem Schritt des Aktualisierens als eine Schreibdatenbank identifiziert wird.

2. Verfahren nach Anspruch 1, wobei der Schritt des Bestimmens (540) das Bestimmen, ob der Ereigniszählwert einen vorgegebenen Ereigniszählwert-Schwellenwert übersteigt und/oder ob ein Zeitdauerwert von einem vorhergehenden Speichertausch einen vorgegebenen Zeitdauerwert übersteigt, enthält.

3. Verfahren nach Anspruch 2, wobei der vorgegebene Ereigniszählwert-Schwellenwert und der vorgegebene Zeitdauerwert auf der Anzahl in einer Zeitdauer empfangener Ereignisse und/oder auf der Tageszeit und/oder auf einer Anzahl von Ereignisabfragen in einer Zeitdauer beruhen.

4. Verfahren nach Anspruch 1, das ferner umfasst:
Empfangen einer Ereignisabfrage, wobei die Ereignisabfrage Informationen anfordert, die einem oder mehreren Ereignissen zugeordnet sind;
Bestimmen, ob die erste Ereignisdatenbank aktualisiert worden ist;
Lenken der Ereignisabfrage zu der ersten Ereignisdatenbank als einer Lesedatenbank, falls die erste Ereignisdatenbank aktualisiert worden ist.

5. Verfahren nach Anspruch 4, das ferner umfasst:
Lenken der Ereignisabfrage zu der zweiten Ereignisdatenbank als einer Lesedatenbank, falls die erste Ereignisdatenbank nicht aktualisiert worden ist.

6. Verfahren nach Anspruch 1, wobei die Ereignisdaten, die Medieninhalt zugeordnet sind, von einer von mindestens zwei Inhaltsquellen empfangen werden.

7. Vorrichtung (200), die umfasst:
ein Mittel (202) zum Empfangen von Ereignisdaten, die Medieninhalt zugeordnet sind, wobei die Ereignisdaten eine Ereigniskennung enthalten;
ein Mittel (214) zum Bestimmen, ob die Ereigniskennung mit einer Ereigniskennung für bereits in einem ersten Cache-Speicher gespeicherte Ereignisdaten übereinstimmt;
ein Mittel (220) zum Hinzufügen der empfangenen Ereignisdaten zu den in dem ersten Cache-Speicher gespeicherten Ereignisdaten, falls die empfangene Ereigniskennung mit einer Ereigniskennung für die in dem ersten Cache-Speicher gespeicherten Ereignisdaten nicht übereinstimmt;
ein Mittel (220) zum Ersetzen der in dem ersten Cache-Speicher gespeicherten Ereignisdaten durch die empfangenen Ereignisdaten, falls die empfangene Ereigniskennung mit der Ereigniskennung für die in dem ersten Cache-Speicher gespeicherten Ereignisdaten übereinstimmt, wobei die Vorrichtung ferner **dadurch gekennzeichnet ist, dass** das Mittel (212) zum Hinzufügen der empfangenen Ereignisdaten außerdem einen Ereigniszählwert inkrementiert und dass das Mittel (212) zum Ersetzen der in dem ersten Cache-Speicher gespeicherten Ereignisdaten den Ereigniszählwert nicht inkrementiert, und wobei die Vorrichtung ferner umfasst:
ein Mittel (800) zum Bestimmen, ob ein Cache-Speichertausch stattfinden soll, wobei die Bestimmung auf dem Ereigniszählwert und auf einer Zeitdauer von einem vorhergehenden Cache-Speichertausch beruht, wobei der erste Cache-Speicher mit einem zweiten Cache-Speicher getauscht wird, wobei nach dem Cache-Speichertausch der zweite Cache-Speicher die Schritte des Empfangens, des Bestimmens, des Hinzufügens und des Ersetzens ausführt;
ein Mittel (212) zum Aktualisieren einer ersten Ereignisdatenbank mit den Ereignisdaten in dem ersten Cache-Speicher, falls bestimmt wird, dass der Cache-Speichertausch stattfinden soll, wobei die erste Ereignisdatenbank vor dem Schritt des Aktualisierens der ersten Ereignisdatenbank als eine Schreibdatenbank identifiziert wird und nach dem Schritt des Aktualisierens als eine Lesedatenbank identifiziert wird; und
ein Mittel (212) zum Kopieren des Inhalts der aktualisierten ersten Ereignisdatenbank in eine zweite Ereignisdatenbank, wobei die zweite Ereignisdatenbank vor dem Schritt des Aktualisierens als eine Lesedatenbank identifiziert wird und nach dem Schritt des Aktualisierens als eine Schreibdatenbank identifiziert wird.

8. Vorrichtung nach Anspruch 7, wobei das Mittel (800) zum Bestimmen ein Mittel zum Bestimmen, ob der Ereigniszählwert einen vorgegebenen Ereigniszählwert-Schwellenwert übersteigt und/oder ob ein Zeitdauerwert von einem vorhergehenden Speichertausch einen vorgegebenen Zeitdauerwert übersteigt, enthält.

9. Vorrichtung nach Anspruch 7, die ferner umfasst:
ein Mittel (216, 222) zum Empfangen einer Ereignisabfrage, wobei die Ereignisabfrage Informationen anfordert, die einem oder mehreren Ereignissen zugeordnet sind;
ein Mittel zum Bestimmen, ob die erste Ereignisdatenbank aktualisiert worden ist;
ein Mittel zum Lenken der Ereignisabfrage zu der ersten Ereignisdatenbank als einer Lesedatenbank, falls die erste Ereignisdatenbank aktualisiert worden ist.

10. Vorrichtung nach Anspruch 9, die ferner umfasst:
ein Mittel zum Lenken der Ereignisabfrage zu der zweiten Ereignisdatenbank als einer Lesedatenbank, falls die erste Datenbank nicht aktualisiert worden ist.

11. Vorrichtung nach Anspruch 7, wobei die Vorrichtung eine Empfangseinrichtung, die Ereignisdaten von einem Rundfunkinhalts-Liefernetz empfängt, und ein Rundfunkinhalts-Liefernetz ist.

## Revendications

1. Procédé comprenant :
la réception (525) de données d'événement associées à un contenu multimédia, les données d'événement incluant un identificateur d'événement ;
la détermination (540) d'une correspondance entre l'identificateur d'événement et un identificateur d'événement de données d'événement déjà stockées dans une première mémoire cache ;
l'ajout (750) des données d'événement reçues aux données d'événement stockées dans la première mémoire cache si l'identificateur d'événement reçu ne correspond pas à un identificateur d'événement des données d'événement stockées dans la première mémoire cache ;
le remplacement (765) des données d'événement stockées dans la première mémoire cache par les données d'événement reçues si l'identificateur d'événement reçu correspond à l'identificateur d'événement des données d'événement stockées dans la première mémoire cache, le procédé étant en outre **caractérisé en ce que** l'étape d'ajout (750) des données d'événement reçues incrémente également (755) une valeur de compte d'événements et l'étape de remplacement des données d'événement stockées dans la première mémoire cache n'incrémente pas la valeur de compte d'événements et le procédé comprend en outre :
la détermination (510, 550) d'un changement de mémoire cache à effectuer, la détermination étant basée sur la valeur de compte d'événements et une période de temps depuis un changement de mémoire cache précédent, dans laquelle la première mémoire cache est changée par une seconde mémoire cache, ladite seconde mémoire cache effectuant les étapes de réception, de détermination, d'ajout et de remplacement après le changement de mémoire cache ;
la mise à jour (610) d'une première base de données d'événements avec les données d'événement de la première mémoire cache après détermination d'un changement de mémoire cache, la première base de données d'événements étant identifiée comme une base de données en écriture avant l'étape de mise à jour de la première base de données d'événements et identifiée comme une base de données en lecture après l'étape de mise à jour ; et
la copie (660) du contenu de la première base de données d'événements mise à jour dans une seconde base de données d'événements, la seconde base de données d'événements étant identifiée comme une base de données en lecture avant l'étape de mise à jour et identifiée comme une base de données en écriture après l'étape de mise à jour.

2. Procédé selon la revendication 1, dans lequel l'étape de détermination (540) implique de déterminer si au moins l'une des valeurs de compte d'événements dépasse une valeur de seuil de compte d'événements prédéterminée et si une valeur de période de temps depuis un changement de mémoire précédent dépasse une valeur de période de temps prédéterminée.

3. Procédé selon la revendication 2, dans lequel la valeur de seuil de compte d'événements prédéterminée et la valeur de période de temps prédéterminée sont basées sur au moins l'un des événements reçus dans une période de temps, l'heure de la journée et les requêtes d'événements dans une période de temps.

4. Procédé selon la revendication 1, comprenant en outre :
la réception d'une requête d'événement, la requête d'événement demandant des informations associées à un ou plusieurs événements ;
la détermination de la mise à jour de la première base de données d'événements ;
la transmission de la requête d'événement à la première base de données d'événements en tant que base de données en lecture si la première base de données d'événements a été mise à jour.

5. Procédé selon la revendication 4, comprenant en outre :
la transmission de la requête d'événement à la seconde base de données d'événements comme base de données en lecture si la première base de données d'événements n'a pas été mise à jour.

6. Procédé selon la revendication 1, dans lequel les données d'événement associées au contenu multimédia sont reçues à partir d'une d'au moins deux sources de contenu.

7. Appareil (200) comprenant :
un moyen permettant de recevoir (202) des données d'événement associées à un contenu multimédia, les données d'événement incluant un identificateur d'événement ;
un moyen permettant de déterminer (214) si l'identificateur d'événement correspond à un identificateur d'événement de données d'événement déjà stockées dans une première mémoire cache ;
un moyen permettant d'ajouter (220) les données d'événement reçues aux données d'événement stockées dans la première mémoire cache si l'identificateur d'événement reçu ne correspond pas à un identificateur d'événement de données d'événement stockées dans la première mémoire cache ;
un moyen permettant de remplacer (220) les données d'événement stockées dans la première mémoire cache par les données d'événement reçues si l'identificateur d'événement reçu correspond à l'identificateur d'événement des données d'événement stockées dans la première mémoire cache, l'appareil étant en outre **caractérisé en ce que** le moyen d'ajout (212) des données d'événement reçues incrémente également une valeur de compte d'événements et le moyen de remplacement (212) des données d'événement stockées dans la première mémoire cache n'incrémente pas la valeur de compte d'événements et l'appareil comprend en outre :
un moyen permettant de déterminer (800) si un changement de mémoire cache doit avoir lieu, la détermination étant basée sur la valeur de compte d'événements et une période de temps depuis un changement de mémoire cache précédent, dans lequel la première mémoire cache est changée par une seconde mémoire cache, ladite seconde mémoire cache effectuant les étapes de réception, de détermination, d'ajout et de remplacement après le changement de mémoire cache ;
un moyen permettant de mettre à jour (212) une première base de données d'événements avec les données d'événement de la première mémoire cache s'il est déterminé que le changement de mémoire cache doit avoir lieu, la première base de données d'événements étant identifiée comme une base de données en écriture avant l'étape de mise à jour de la première base de données d'événements et identifiée comme une base de données en lecture après l'étape de mise à jour ; et
un moyen permettant de copier (212) le contenu de la première base de données d'événements mise à jour dans une seconde base de données d'événements, la seconde base de données d'événements étant identifiée comme une base de données en lecture avant l'étape de mise à jour et identifiée comme base de données en écriture après l'étape de mise à jour.

8. Appareil selon la revendication 7, dans lequel le moyen de détermination (800) inclut un moyen permettant de déterminer si au moins l'une des valeurs de compte d'événements dépasse une valeur de seuil de compte d'événements prédéterminée et si une valeur de période de temps depuis un changement de mémoire précédent dépasse une valeur de période de temps prédéterminée.

9. Appareil selon la revendication 7, comprenant en outre :
un moyen permettant de recevoir (216, 222) une requête d'événement, la requête d'événement demandant des informations associées à un ou plusieurs événements ;
un moyen permettant de déterminer si la première base de données d'événements a été mise à jour ;
un moyen permettant de transmettre la requête d'événement à la première base de données d'événements comme base de données en lecture si la première base de données d'événements a été mise à jour.

10. Appareil selon la revendication 9, comprenant en outre :
un moyen permettant de transmettre la requête d'événement à la seconde base de données d'événements comme base de données en lecture si la première base de données n'a pas été mise à jour.

11. Appareil selon la revendication 7, dans lequel l'appareil est un dispositif de réception qui reçoit des données d'événement d'un réseau de distribution de contenu de diffusion et d'un réseau de distribution de contenu à large bande.
